# EUROPEAN PATENT APPLICATION

(11) **EP 4 693 953 A1**
(43) Date of publication of application: **11.02.2026**
(21) Application number: 24809982.2
(22) Date of filing: 23.02.2024
(51) Int. Cl.: H04B 10/25

(54) **DUMMY LIGHT TRANSMISSION METHOD, DUMMY LIGHT IDENTIFICATION METHOD AND RELATED APPARATUS**

(30) Priority: 23.05.2023 CN 202310587577
(71) Applicant: Huawei Technologies Co., Ltd., Shenzhen, Guangdong 518129 (CN)
(72) Inventor: AI, Fan, Shenzhen, Guangdong 518129 (CN); CHANG, Zhiwen, Shenzhen, Guangdong 518129 (CN); ZHU, Zhijun, Shenzhen, Guangdong 518129 (CN)
(74) Representative: MERH-IP Matias Erny Reichl Hoffmann Patentanwälte PartG mbB
(86) International application number: PCT/CN2024/078272
(87) International publication number: WO 2024/239733

(57) **Abstract**

Embodiments of this application disclose a dummy light transmission method, a dummy light identification method, and a related device. Specifically, a light emitting apparatus performs spectrum shaping on first multi-wavelength dummy light generated by a dummy light source, to obtain second multi-wavelength dummy light, so that a spectral feature of the second multi-wavelength dummy light is different from a spectral feature of service light. The light emitting apparatus selects target dummy light from the second multi-wavelength dummy light to fill an idle band. A light receiving apparatus receives the service light and the target dummy light from the light emitting apparatus. Because the target dummy light and the service light have different spectral features, the light receiving apparatus can effectively distinguish the service light from the target dummy light through spectrum detection and spectrum analysis. It should be understood that a manner of constructing a spectral feature through spectrum shaping is simple to implement, and no additional modulation needs to be performed on dummy light.

## Description

This application claims priority to Chinese Patent Application No. 202310587577.6, filed with the China National Intellectual Property Administration on May 23, 2023 and entitled "DUMMY LIGHT TRANSMISSION METHOD, DUMMY LIGHT IDENTIFICATION METHOD, AND RELATED DEVICE", which is incorporated herein by reference in its entirety.

### TECHNICAL FIELD

This application relates to the field of optical transmission, and in particular, to a dummy light transmission method, a dummy light identification method, and a related device.

### BACKGROUND

With the information development of the society, an amount of data transmitted in a backbone pipeline is increasing. To increase an amount of data transmitted through a single optical fiber, an optical wavelength division multiplexing (Wavelength Division Multiplexing, WDM) technology is usually used for optical signal multiplexing and transmission. Because of the use of the WDM technology, there are optical signals with a plurality of wavelengths in one optical fiber. However, due to service volume requirements and hardware limitations, a planned band is not fully occupied.

When optical bandwidth occupied by the WDM gradually increases and enters a C+L band, dynamic adding or dropping of a wavelength in a network is affected by a stimulated Raman scattering (Stimulated Raman scattering, SRS) effect, and when the band is not fully occupied, power jitter increases sharply. Therefore, dummy light (Dummy Light, DL) that does not carry service information needs to be used to occupy an idle band, to ensure stable running of a system. However, it is difficult to distinguish between the dummy light and service light during simultaneous transmission of the dummy light and the service light through the optical fiber.

### SUMMARY

Embodiments of this application provide a dummy light transmission method, a dummy light identification method, and a related device, so that service light can be effectively distinguished from dummy light by using different spectral features.

According to a first aspect, an embodiment of this application provides a dummy light transmission method. Specifically, a light emitting apparatus generates first multi-wavelength dummy light. The first multi-wavelength dummy light is distributed in a plurality of bands. Optionally, a wavelength range covers an entire communication wavelength range, so that dummy light can be selected based on an actual requirement to fill an idle band. The light emitting apparatus performs spectrum shaping on the first multi-wavelength dummy light to obtain second multi-wavelength dummy light. A spectral feature of the second multi-wavelength dummy light obtained through the spectrum shaping is different from a spectral feature of service light. During actual application, a band not occupied by the service light is referred to as an idle band. To implement full-band transmission, the light emitting apparatus selects target dummy light from the second multi-wavelength dummy light and fills the target dummy light in the idle band. In other words, a band of the target dummy light is different from a band of the service light. Further, the light emitting apparatus multiplexes and emits the service light and the target dummy light.

In this implementation, the spectral feature of the second multi-wavelength dummy light obtained by the light emitting apparatus through the spectrum shaping is different from the spectral feature of the service light. Therefore, a light receiving apparatus can effectively distinguish the service light from the target dummy light through spectrum detection and spectrum analysis. It should be understood that a manner of constructing a spectral feature through spectrum shaping is simple to implement, and no additional modulation needs to be performed on dummy light.

In some possible implementations, dummy light distributed in a first band of the second multi-wavelength dummy light and dummy light distributed in a second band of the second multi-wavelength dummy light have different spectral features. In this way, in a scenario in which a plurality of idle bands are filled with dummy light, it is convenient for the light receiving apparatus to distinguish, based on spectral features, dummy light filled in different idle bands.

In some possible implementations, the spectral feature of the second multi-wavelength dummy light is that a light intensity periodically varies with a wavelength. Because a light intensity of the service light does not periodically vary with a wavelength, it is easy to distinguish the dummy light from the service light by using the spectral feature that the light intensity periodically varies with the wavelength.

In some possible implementations, that the light emitting apparatus performs the spectrum shaping on the first multi-wavelength dummy light to obtain the second multi-wavelength dummy light includes the following steps. First, the light emitting apparatus performs optical splitting on the first multi-wavelength dummy light to obtain two paths of multi-wavelength dummy light. Then, the light emitting apparatus performs phase adjustment on one path of multi-wavelength dummy light in the two paths of multi-wavelength dummy light. An amplitude of the phase adjustment performed by the light emitting apparatus periodically varies with a wavelength. Further, the light emitting apparatus multiplexes the other path of multi-wavelength dummy light in the two paths of multi-wavelength dummy light with a path of multi-wavelength dummy light obtained through the phase adjustment to obtain the second multi-wavelength dummy light. It should be understood that this spectrum shaping manner used by the light emitting apparatus is equivalent to a comb filter, and an actual application effect is good.

In some possible implementations, in the second multi-wavelength dummy light, a length of a first cycle in which a light intensity in the first band varies with a wavelength is different from a length of a second cycle in which a light intensity in the second band varies with a wavelength. In this way, in addition to that the service light can be distinguished from the dummy light by using periodicity features of spectrums, dummy light filled in different bands can also be distinguished by using periodicity features of spectrums.

In some possible implementations, there is a dip spectral feature in at least one band in which the second multi-wavelength dummy light is distributed. In addition, in the dip spectral feature, a light intensity attenuation amplitude in a target wavelength range is greater than a preset value. It should be understood that, because the service light needs to be used to perform transmission of service information, energy of the service light needs to be concentrated at a center wavelength position. The dummy light does not need to be used to perform the transmission of the service information. Therefore, it is considered that light intensity attenuation or blocking is performed on dummy light that is near the center wavelength and that is in a band in which the dummy light is distributed. Therefore, the service light can be effectively distinguished from the dummy light by using the dip spectral feature.

In some possible implementations, that the light emitting apparatus performs the spectrum shaping on the first multi-wavelength dummy light to obtain the second multi-wavelength dummy light includes: The light emitting apparatus attenuates or blocks dummy light in the target wavelength range in at least one band in which the first multi-wavelength dummy light is distributed. For any band, the target wavelength range is a fixed wavelength range in the band. For example, the target wavelength range is a fixed wavelength range that is in the band and that is near a center wavelength. It should be understood that, this spectrum shaping manner used by the light emitting apparatus is equivalent to a band-stop optical filter, and an actual application effect is good.

In some possible implementations, in the second multi-wavelength dummy light, dummy light in different bands has different dip spectral features. In this way, in addition to that the service light can be distinguished from the dummy light by using dip spectral features, dummy light filled in different bands can also be distinguished by using dip spectral features. For example, a wavelength range of a dip spectral feature in the first band is different from a wavelength range of a dip spectral feature in the second band. For another example, a light intensity attenuation amplitude of a dip spectral feature in the first band is different from a light intensity attenuation amplitude of a dip spectral feature in the second band. For still another example, in the second multi-wavelength dummy light, a quantity of dip spectral features in the first band is different from a quantity of dip spectral features in the second band.

According to a second aspect, an embodiment of this application provides a dummy light identification method. Specifically, a light receiving apparatus receives transmitted light through an optical fiber. The transmitted light is distributed in a plurality of bands. The light receiving apparatus obtains a spectral feature of the transmitted light through spectrum detection. Further, the light receiving apparatus performs spectrum analysis on the spectral feature of the transmitted light, to determine that transmitted light that is in a target band and that has a preset spectral feature in the transmitted light is dummy light.

In some possible implementations, the preset spectral feature is that a light intensity periodically varies with a wavelength, and a length of a cycle in which the light intensity varies with the wavelength is a preset cycle length. That the light receiving apparatus performs the spectrum analysis on the spectral feature of the transmitted light, to determine that the transmitted light that is in the target band and that has the preset spectral feature in the transmitted light is the dummy light includes the following steps. The light receiving apparatus obtains a target band in which a light intensity periodically varies with a wavelength and that is of the transmitted light. Then, the light receiving apparatus compares the length that is of the preset cycle in which the light intensity varies with the wavelength and that is described by using the preset spectral feature, with a length that is of a target cycle in which the light intensity varies with the wavelength and that is in a spectral feature of the target band. If an absolute value of a difference between the length of the preset cycle and the length of the target cycle is less than a preset value, the light receiving apparatus determines that the transmitted light in the target band is the dummy light.

In some possible implementations, the preset spectral feature is a dip spectral feature, and a light intensity attenuation amplitude is greater than a preset value. That the light receiving apparatus performs the spectrum analysis on the spectral feature of the transmitted light, to determine that the transmitted light that is in the target band and that has the preset spectral feature in the transmitted light is the dummy light includes the following steps. The light receiving apparatus obtains a target band in which the transmitted light has the dip spectral feature. In the dip spectral feature in the target band, if a light intensity attenuation amplitude in a target wavelength range is greater than a preset value, the light receiving apparatus determines that the transmitted light in the target band is the dummy light.

According to a third aspect, an embodiment of this application provides a light emitting apparatus. The light emitting apparatus includes: a dummy light generation unit, a spectrum shaping unit, a processing unit, and a multiplexing and emitting unit. The dummy light generation unit is configured to generate first multi-wavelength dummy light. The first multi-wavelength dummy light is distributed in a plurality of bands. The spectrum shaping unit is configured to perform spectrum shaping on the first multi-wavelength dummy light to obtain second multi-wavelength dummy light. A spectral feature of the second multi-wavelength dummy light is different from a spectral feature of service light. The processing unit is configured to obtain target dummy light from the second multi-wavelength dummy light. A band of the target dummy light is different from a band of the service light. The multiplexing and emitting unit is configured to emit the service light and the target dummy light through an optical fiber.

In some possible implementations, dummy light distributed in a first band of the second multi-wavelength dummy light and dummy light distributed in a second band of the second multi-wavelength dummy light have different spectral features.

In some possible implementations, a light intensity of the second multi-wavelength dummy light periodically varies with a wavelength.

In some possible implementations, the spectrum shaping unit includes: a beam splitter, a phase shifter, and a beam combiner. The beam splitter is configured to perform optical splitting on the first multi-wavelength dummy light to obtain two paths of multi-wavelength dummy light. The phase shifter is configured to perform phase adjustment on one path of multi-wavelength dummy light in the two paths of multi-wavelength dummy light, where an amplitude of the phase adjustment periodically varies with a wavelength. The beam combiner is configured to multiplex the other path of multi-wavelength dummy light in the two paths of multi-wavelength dummy light with a path of multi-wavelength dummy light obtained through the phase adjustment to obtain the second multi-wavelength dummy light.

In some possible implementations, in the second multi-wavelength dummy light, a length of a first cycle in which a light intensity in the first band varies with a wavelength is different from a length of a second cycle in which a light intensity in the second band varies with a wavelength.

In some possible implementations, there is a dip spectral feature in at least one band in which the second multi-wavelength dummy light is distributed, and in the dip spectral feature, a light intensity attenuation amplitude in a target wavelength range is greater than a preset value.

In some possible implementations, the spectrum shaping unit is specifically configured to attenuate or block dummy light in the target wavelength range in at least one band in which the first multi-wavelength dummy light is distributed.

In some possible implementations, in the second multi-wavelength dummy light, dummy light in different bands has different dip spectral features. In this way, in addition to that the service light can be distinguished from the dummy light by using dip spectral features, dummy light filled in different bands can also be distinguished by using dip spectral features. For example, a wavelength range of a dip spectral feature in the first band is different from a wavelength range of a dip spectral feature in the second band. For another example, a light intensity attenuation amplitude of a dip spectral feature in the first band is different from a light intensity attenuation amplitude of a dip spectral feature in the second band. For still another example, in the second multi-wavelength dummy light, a quantity of dip spectral features in the first band is different from a quantity of dip spectral features in the second band.

According to a fourth aspect, an embodiment of this application provides a light receiving apparatus. The light receiving apparatus includes a receiving unit, a spectrum detection unit, and a processing unit. The receiving unit is configured to receive transmitted light through an optical fiber. The transmitted light is distributed in a plurality of bands. The spectrum detection unit is configured to obtain a spectral feature of the transmitted light. The processing unit is configured to perform spectrum analysis on the spectral feature of the transmitted light, to determine that transmitted light that is in a target band and that has a preset spectral feature in the transmitted light is dummy light.

In some possible implementations, the preset spectral feature is that a light intensity periodically varies with a wavelength, and a length of a cycle in which the light intensity varies with the wavelength is a preset cycle length. The processing unit is specifically configured to: obtain a target band in which a light intensity periodically varies with a wavelength and that is of the transmitted light; compare the length that is of the preset cycle in which the light intensity varies with the wavelength and that is described by using the preset spectral feature, with a length that is of a target cycle in which the light intensity varies with the wavelength and that is in a spectral feature of the target band; and if an absolute value of a difference between the length of the preset cycle and the length of the target cycle is less than a preset value, determine that the transmitted light in the target band is the dummy light.

In some possible implementations, the preset spectral feature is a dip spectral feature, and a light intensity attenuation amplitude is greater than a preset value. The processing unit is specifically configured to: obtain a target band in which the transmitted light has a dip spectral feature; and in the dip spectral feature in the target band, if a light intensity attenuation amplitude in a target wavelength range is greater than a preset value, determine that the transmitted light in the target band is the dummy light.

According to a fifth aspect, an embodiment of this application provides an optical transmission system. The optical transmission system includes the light emitting apparatus described in any implementation of the third aspect and the light receiving apparatus described in any implementation of the fourth aspect.

In embodiments of this application, a light emitting apparatus performs spectrum shaping on first multi-wavelength dummy light generated by a dummy light source, to obtain second multi-wavelength dummy light, so that a spectral feature of the second multi-wavelength dummy light is different from a spectral feature of service light. The light emitting apparatus selects target dummy light from the second multi-wavelength dummy light to fill an idle band. A light receiving apparatus receives the service light and the target dummy light from the light emitting apparatus. Because the target dummy light and the service light have different spectral features, the light receiving apparatus can effectively distinguish the service light from the target dummy light through spectrum detection and spectrum analysis. It should be understood that a manner of constructing a spectral feature through spectrum shaping is simple to implement, and no additional modulation needs to be performed on dummy light.

### BRIEF DESCRIPTION OF DRAWINGS

FIG. 1 is a diagram of an optical communication system to which an embodiment of this application is applied;
FIG. 2 is a diagram of an embodiment of a dummy light transmission method according to an embodiment of this application;
FIG. 3 is a diagram of a spectrum of service light according to an embodiment of this application;
FIG. 4 is a diagram of a first-type spectral feature of second multi-wavelength dummy light according to an embodiment of this application;
FIG. 5 is a diagram of an implementation of spectrum shaping according to an embodiment of this application;
FIG. 6 is a diagram of a second-type spectral feature of second multi-wavelength dummy light according to an embodiment of this application;
FIG. 7 is a diagram of an embodiment of a dummy light identification method according to an embodiment of this application;
FIG. 8 is a diagram of a first comparison between spectral features of dummy light in different bands according to an embodiment of this application;
FIG. 9 is a diagram of a second comparison between spectral features of dummy light in different bands according to an embodiment of this application;
FIG. 10 is a diagram of a third comparison between spectral features of dummy light in different bands according to an embodiment of this application;
FIG. 11 is a diagram of a fourth comparison between spectral features of dummy light in different bands according to an embodiment of this application;
FIG. 12 is a diagram of a structure of a light emitting apparatus according to an embodiment of this application;
FIG. 13 is a diagram of a structure of a light receiving apparatus according to an embodiment of this application;
FIG. 14 is a diagram of a structure of another light emitting apparatus according to an embodiment of this application; and
FIG. 15 is a diagram of a structure of another light receiving apparatus according to an embodiment of this application.

### DESCRIPTION OF EMBODIMENTS

Embodiments of this application provide a dummy light transmission method, a dummy light identification method, and a related device, so that service light can be effectively distinguished from dummy light by using different spectral features. It should be noted that, the terms "first", "second", and the like in the specification, claims, and the accompanying drawings of this application are intended to distinguish between similar objects, but do not limit a specific order or sequence. It should be understood that the foregoing terms may be interchanged in a proper case, so that embodiments described in this application can be implemented in an order other than the content described in this application.

For ease of understanding, some terms in embodiments of this application are first introduced below.
(1) Service light: The service light refers to an optical signal that carries service information and that is obtained by modulating an optical carrier.
(2) Dummy light (Dummy Light, DL): The dummy light is different from the service light, and the dummy light is an optical carrier that is not modulated and that does not carry the service information. The dummy light is mainly used to fill an idle band that is not occupied by the service light.
(3) Spectral feature: The spectral feature is a shape feature of light intensity distributed based on a wavelength or frequency, and may also be referred to as an optical spectral feature.
(4) Spectrum shaping: The spectrum shaping is an implementation in which a spectral feature is constructed by adjusting light intensity. For example, the spectrum shaping may be considered as an optical filtering method. It should be understood that the spectrum shaping is different from the modulation of the optical carrier, and there is no need for the spectrum shaping to load an electrical signal for modulation.

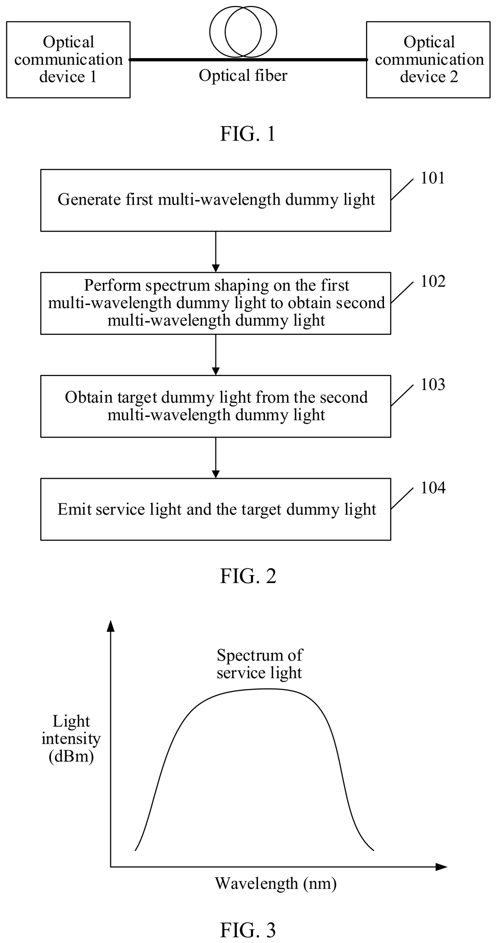

FIG. 1 is a diagram of an optical communication system to which an embodiment of this application is applied. As shown in FIG. 1, an optical communication device 1 and an optical communication device 2 perform transmission of multi-wavelength service light through an optical fiber. Optionally, both the optical communication device 1 and the optical communication device 2 are transceiver devices, that is, FIG. 1 shows an optical communication system for bidirectional transmission. The transmission of the multi-wavelength service light through the optical fiber is affected by a stimulated Raman scattering (Stimulated Raman Scattering, SRS) effect, and consequently, transmission power of a short band is transferred to transmission power of a long band. If wavelength adding or dropping does not occur on the current multi-wavelength service light, the power transfer caused by the SRS effect is stable. If wavelength adding or dropping occurs, a complex change occurs on the power transfer between the multi-wavelength service light, and may exceed a system bearing capability. Therefore, a current idle band needs to be filled with dummy light to ensure stable running of the system. In this way, this application provides a manner in which the service light can be effectively distinguished from the dummy light, and the manner is described in detail below.

FIG. 2 is a diagram of an embodiment of a dummy light transmission method according to an embodiment of this application. This example is applied to a light emitting apparatus, and a dummy light transmission method includes the following steps.

101: Generate first multi-wavelength dummy light.

It should be noted that a dummy light source for generating the first multi-wavelength dummy light is a multi-wavelength light source, and a wavelength range covers an entire communication wavelength range. For ease of description, in this application, dummy light distributed in a plurality of bands is referred to as the first multi-wavelength dummy light, so that the dummy light is selected based on an actual requirement to fill an idle band. Each band covers a fixed wavelength range, and the band may also be referred to as a wavelength band or a wavelength path. It should be understood that a band in which service light is distributed is specifically subject to actual application. This is not limited in this application.

102: Perform spectrum shaping on the first multi-wavelength dummy light to obtain second multi-wavelength dummy light.

In this embodiment, a spectral feature of the second multi-wavelength dummy light obtained through the spectrum shaping is different from a spectral feature of service light. In other words, a curve of a light intensity that is of the second multi-wavelength dummy light and that varies with a wavelength is different from a curve of a light intensity that is of the service light and that varies with a wavelength. FIG. 3 is a diagram of a spectrum of service light according to an embodiment of this application. FIG. 3 shows a common spectral feature of service light distributed in a specific band. In this application, the second multi-wavelength dummy light constructed through the spectrum shaping has a spectral feature different from that of the service light. Further, dummy light distributed in at least one band of the second multi-wavelength dummy light has a spectral feature different from that of the service light. Optionally, dummy light distributed in each band of the second multi-wavelength dummy light has a spectral feature different from that of the service light. Optionally, dummy light distributed in different bands of the second multi-wavelength dummy light may also have different spectral features, to distinguish between the dummy light distributed in different bands.

It should be understood that this application provides several types of specific spectral features of the second multi-wavelength dummy light, but another possible spectral feature of the second multi-wavelength dummy light is not excluded. During actual application, the service light and the dummy light can be clearly distinguished from each other through spectrum detection.

The following describes a first-type spectral feature of the second multi-wavelength dummy light provided in this application.

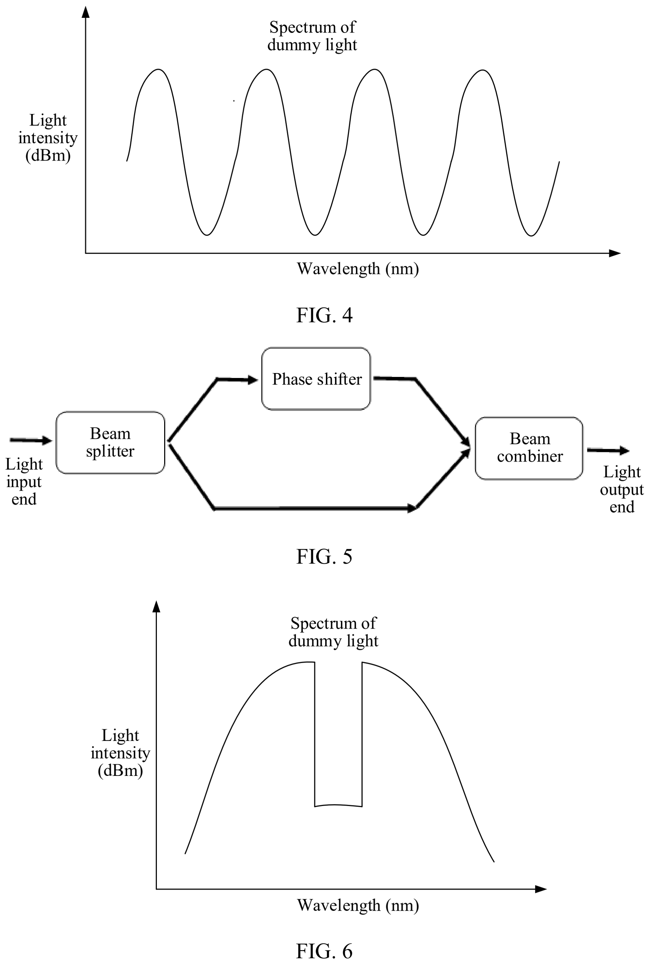

FIG. 4 is a diagram of the first-type spectral feature of the second multi-wavelength dummy light according to an embodiment of this application. As shown in FIG. 4, a light intensity of the second multi-wavelength dummy light periodically varies with a wavelength. This is clearly different from the spectral feature of the service light shown in FIG. 3. It should be understood that, based on an entire spectral feature of the second multi-wavelength dummy light shown in FIG. 4, dummy light in any band of the second multi-wavelength dummy light also has the feature that the light intensity periodically varies with the wavelength. In other words, a cycle in which the light intensity varies with the wavelength is less than a coverage area of a band, and there is the feature that the light intensity periodically varies with the wavelength in any band captured from FIG. 4. It should be understood that a length of the cycle in which the light intensity varies with the wavelength may be flexibly set. This is not specifically limited herein.

The following describes a specific implementation of the first-type spectral feature of the second multi-wavelength dummy light.

FIG. 5 is a diagram of an implementation of spectrum shaping according to an embodiment of this application. As shown in FIG. 5, a beam splitter performs optical splitting on input first multi-wavelength dummy light to obtain two paths of multi-wavelength dummy light. A phase shifter performs phase adjustment on one path of multi-wavelength dummy light to change a phase of the path of multi-wavelength dummy light. A beam combiner multiplexes a path of multi-wavelength dummy light obtained through the phase adjustment with the other path of multi-wavelength dummy light, to obtain second multi-wavelength dummy light. It should be understood that the two paths of multi-wavelength dummy light input into the beam combiner may interfere with each other, and consequently, an intensity of the multiplexed light changes. Therefore, a spectral feature of the output second multi-wavelength dummy light changes compared to that of the input first multi-wavelength dummy light. It should be understood that the implementation shown in FIG. 5 is equivalent to a comb filter. After the first multi-wavelength dummy light passes through the comb filter, the second multi-wavelength dummy light whose light intensity periodically varies with a wavelength is formed.

It should be noted that an amplitude of the phase adjustment performed by the phase shifter periodically varies with a wavelength. In other words, in each wavelength cycle, the amplitude of the phase adjustment performed by the phase shifter on input dummy light of different wavelengths is variable. In addition, this variation rule of the phase adjustment amplitude is the same in each wavelength cycle. In this way, a rule of mutual interference between the two paths of dummy light is the same in each wavelength cycle, and a variation rule of a light intensity of finally output dummy light is also the same in each wavelength cycle. Therefore, the second multi-wavelength dummy light has the feature that the light intensity periodically varies with the wavelength.

It should be further noted that, a length of a cycle in which the light intensity of the second multi-wavelength dummy light varies with the wavelength is determined by a length of a cycle in which the phase adjustment amplitude of the phase shifter varies with the wavelength. In this case, a cycle length of a spectral feature can be flexibly adjusted by changing the length of the cycle in which the phase adjustment amplitude varies with the wavelength. In some possible scenarios, in the second multi-wavelength dummy light, lengths of cycles in which light intensities of dummy light distributed in different bands vary with the wavelength may alternatively be different. For example, a length of a cycle in which a light intensity of dummy light in a band A varies with a wavelength is A, and a length of a cycle in which a light intensity of dummy light in a band B varies with a wavelength is B. In this way, in addition to that the service light can be distinguished from the dummy light by using periodicity features of spectrums, dummy light filled in different bands can also be distinguished by using periodicity features of spectrums.

In some possible implementations, a maximum light intensity and a minimum light intensity that are of the second multi-wavelength dummy light can be adjusted by adjusting a split ratio of an optical splitter. In other words, the split ratio of the optical splitter affects a difference between a peak and a trough in FIG. 4. Specifically, a larger split ratio indicates a larger difference between the peak and the trough.

The following describes a second-type spectral feature of the second multi-wavelength dummy light provided in this application.

FIG. 6 is a diagram of the second-type spectral feature of the second multi-wavelength dummy light according to an embodiment of this application. FIG. 6 shows a spectral feature of dummy light distributed in a specific band of the second multi-wavelength dummy light. It may be learned from a comparison between FIG. 6 and FIG. 3 that a spectrum of the dummy light has a dip spectral feature, and is clearly different from the spectral feature of the service light. In addition, in the dip spectral feature, a light intensity attenuation amplitude at a dip position is greater than a preset value, so that the dip spectral feature can be more clearly distinguished from the spectral feature of the service light. It should be understood that, because the service light needs to be used to perform transmission of service information, energy of the service light needs to be concentrated at a center wavelength position. The dummy light does not need to be used to perform the transmission of the service information. Therefore, it is considered that light intensity attenuation or blocking is performed on dummy light that is near the center wavelength and that is in a band in which the dummy light is distributed.

In a possible implementation, the spectrum shaping is specifically implemented by using a band-stop optical filter. The band-stop optical filter is used to perform the light intensity attenuation or blocking on the dummy light near the center wavelength in the band, to implement a spectral feature of the dummy light similar to that shown in FIG. 6. It should be understood that a specific structure of the band-stop optical filter is not limited in this application, provided that an optical filtering manner used for the spectrum shaping can be used to attenuate or block dummy light in a specified wavelength range.

It should be understood that a specific wavelength range of a dip position and a specific light intensity attenuation amplitude at the dip position in the spectral feature of the dummy light are not limited in this application, and can be flexibly adjusted based on an actual requirement. Optionally, in some possible scenarios, there may be a plurality of dip positions in the spectral feature of the dummy light, and a specific quantity of dip positions is not limited herein.

It should be noted that, the dummy light distributed in different bands of the second multi-wavelength dummy light may alternatively have different spectral features. For example, the dummy light distributed in different bands is distinguished from each other by using an attenuation amplitude at a dip position in the spectral feature. For another example, the dummy light distributed in different bands is distinguished from each other by using a quantity of dip positions in the spectral feature. For another example, the dummy light distributed in different bands is distinguished from each other by using a wavelength range of a dip position in the spectral feature.

103: Obtain target dummy light from the second multi-wavelength dummy light.

During actual application, because wavelength adding or dropping occurs on the service light, the service light does not occupy all bands. A band not occupied by the service light is referred to as an idle band. To avoid impact of an SRS effect, the light emitting apparatus needs to select, from the second multi-wavelength dummy light, the target dummy light that is in the idle band. In other words, a band of the target dummy light is different from a band of the service light. It should be understood that a quantity of bands covered by the target dummy light is not limited in this application, and is specifically subject to an actual quantity of idle bands.

104: Emit the service light and the target dummy light.

The light emitting apparatus multiplexes and emits the service light and the target dummy light. It should be noted that, because the target dummy light fills the idle band that is not occupied by the service light, full-band transmission is implemented by using the service light and the target dummy light, so that stable running of a system is ensured.

The foregoing describes the dummy light transmission method performed by the light emitting apparatus, and the following describes a dummy light identification method performed by a light receiving apparatus.

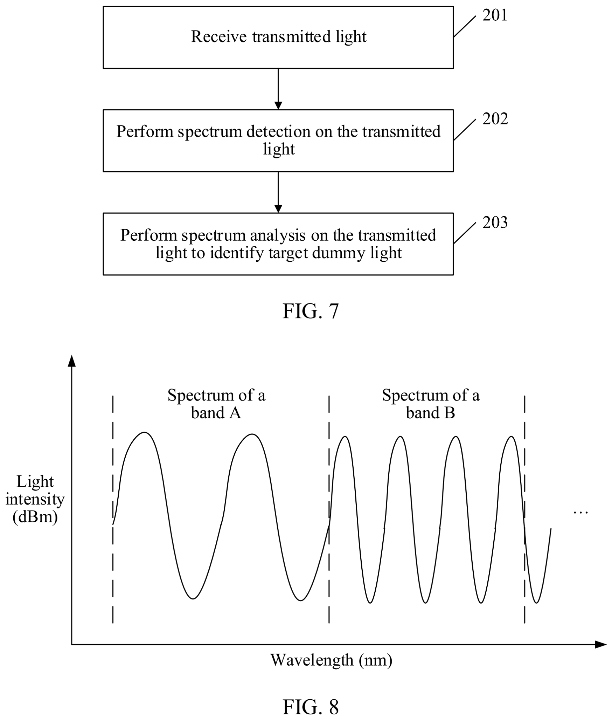

FIG. 7 is a diagram of an embodiment of a dummy light identification method according to an embodiment of this application. In this example, the dummy light identification method includes the following steps.

201: Receive transmitted light.

The light receiving apparatus receives the transmitted light that is from the light emitting apparatus and that is transmitted through an optical fiber. The transmitted light includes service light and target dummy light. For features of the service light and the target dummy light, refer to related descriptions of the embodiment shown in FIG. 2. Details are not described herein again. It should be understood that the light receiving apparatus can identify the service light and the target dummy light after performing spectrum detection and spectrum analysis on the received transmitted light. In a possible scenario, the light receiving apparatus first performs optical splitting on the transmitted light based on optical power to obtain two paths of transmitted light. Each path of transmitted light obtained through the optical splitting includes the service light and the target dummy light, and the two paths of transmitted light are merely different in optical power. For example, the light receiving apparatus performs the spectrum detection and the spectrum analysis on one path of transmitted light with relatively low optical power, and the light receiving apparatus performs conventional processing on the other path of transmitted light with relatively high optical power. In this way, the light receiving apparatus implements dummy light identification without affecting the conventional processing performed by the light receiving apparatus on the transmitted light.

202: Perform the spectrum detection on the transmitted light.

The light receiving apparatus performs the spectrum detection on the received transmitted light, to obtain a spectral feature of the transmitted light. Optionally, the light receiving apparatus performs the spectrum detection by using an optical spectrum analyzer (optical spectrum analyzer, OSA), an optical performance monitor (optical performance monitor, OPM), or the like.

203: Perform spectrum analysis on the transmitted light to identify the target dummy light.

In this embodiment, the light receiving apparatus performs band division on an actually detected spectral feature of the transmitted light, to obtain a spectral feature in each band of the transmitted light. Further, the light receiving apparatus performs the spectrum analysis on the spectral feature in each band of the transmitted light. The spectrum analysis includes but is not limited to comparing based on a preset spectral feature and spectral line detection of a spectrum. It should be understood that, after the light receiving apparatus determines, through the spectrum analysis, a band in which the target dummy light is located, light in another band of the transmitted light is the service light.

Optionally, the target dummy light may include dummy light in a plurality of different bands, and the dummy light in the plurality of different bands has different spectral features. The light receiving apparatus can also distinguish, through the spectrum analysis, dummy light with different spectral features from each other.

The following describes a specific manner of the spectrum analysis based on the two types of spectral features of the dummy light described in the foregoing step 102.

In a possible implementation, the target dummy light has a feature similar to that shown in FIG. 4 that a light intensity periodically varies with a wavelength. In a spectral feature of dummy light preconfigured by the light receiving apparatus, a length of a cycle in which the light intensity varies with the wavelength is denoted as a preset cycle length. The light receiving apparatus determines, through the spectrum analysis, a target band in which a light intensity periodically varies with a wavelength and that is of the transmitted light. In the spectral feature in the target band, a length of a cycle in which the light intensity varies with the wavelength is denoted as a target cycle length. Further, the light receiving apparatus compares the target cycle length with the preset cycle length. If the target cycle length is the same as or close to the preset cycle length, the light receiving apparatus can determine that transmitted light in the target band is the target dummy light.

In a possible scenario, the target dummy light includes dummy light in a plurality of different bands, and the dummy light in the plurality of different bands respectively corresponds to different target cycle lengths. A plurality of different preset cycle lengths are actually preconfigured in the light receiving apparatus. Therefore, the light receiving apparatus compares the target cycle lengths corresponding to the plurality of different bands with the plurality of different preset cycle lengths, so that the dummy light with different spectral features can be distinguished. FIG. 8 is a diagram of a first comparison between spectral features of dummy light in different bands according to an embodiment of this application. For example, a preset cycle length a and a preset cycle length b are actually preconfigured in a light receiving apparatus. As shown in FIG. 8, a target cycle length corresponding to dummy light in a band A is A, and a target cycle length corresponding to dummy light in a band B is B. The target cycle length A is the same as or close to the preset cycle length a, and the target cycle length B is the same as or close to the preset cycle length b. In this way, the light receiving apparatus can distinguish the dummy light in the band A from the dummy light in the band B.

In another possible implementation, the target dummy light has a spectral feature similar to that shown in FIG. 6 that there is a dip in middle of the spectral feature. Specifically, the light receiving apparatus obtains a target band in which the transmitted light has a dip spectral feature. Further, the light receiving apparatus determines whether a light intensity attenuation amplitude in a target wavelength range of the dip spectral feature in the target band is greater than a preset value. If the attenuation amplitude is greater than the preset value, it is determined that light in the target band of the transmitted light is the target dummy light. If the attenuation amplitude is not greater than the preset value, it is determined that the light is the service light.

In another possible scenario, the target dummy light includes dummy light in a plurality of different bands, and dip spectral features of the dummy light in the plurality of different bands are different. A difference between the dip spectral features is reflected in at least one of the following aspects. The light receiving apparatus may distinguish the dummy light with different spectral features from each other by performing spectrum analysis based on the at least one aspect.

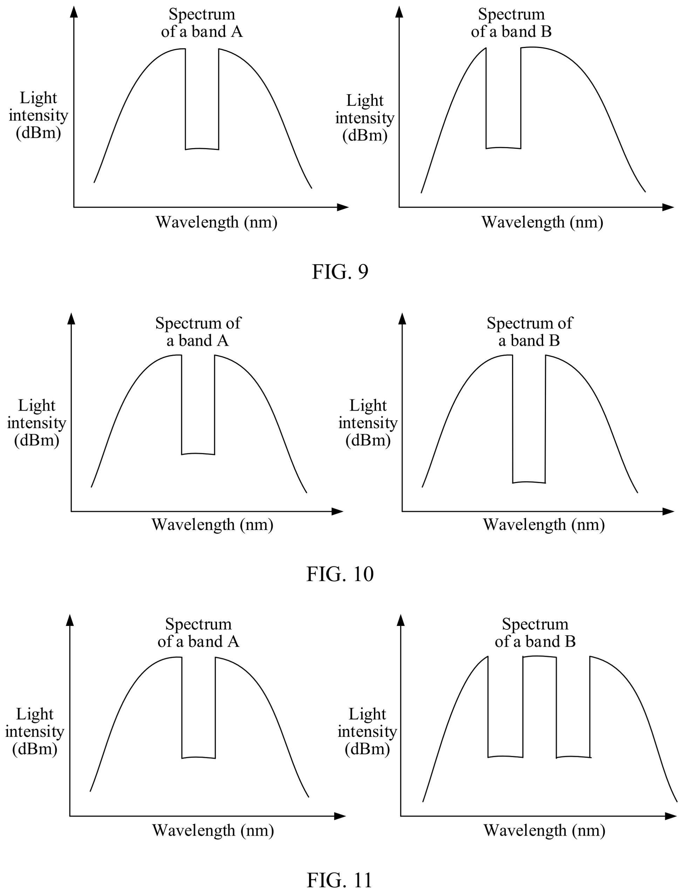

Aspect 1: There is a large difference between wavelength ranges of dip positions in the dip spectral features. FIG. 9 is a diagram of a second comparison between spectral features of dummy light in different bands according to an embodiment of this application. As shown in FIG. 9, in a spectrum of a band A, a dip position is in the center, and in a spectrum of a band B, a dip position is in left of the center.

Aspect 2: There is a large difference between attenuation amplitudes at dip positions in the dip spectral features. FIG. 10 is a diagram of a third comparison between spectral features of dummy light in different bands according to an embodiment of this application. As shown in FIG. 10, an attenuation amplitude at a dip position in a spectrum of a band A is less than an attenuation amplitude at a dip position in a spectrum of a band B.

Aspect 3: There is a large difference between quantities of dip positions in the dip spectral features. FIG. 11 is a diagram of a fourth comparison between spectral features of dummy light in different bands according to an embodiment of this application. As shown in FIG. 11, a quantity of dip positions in a spectrum of a band A is 1, and a quantity of dip positions in a spectrum of a band B is 2.

It may be learned from the foregoing descriptions that a light emitting apparatus performs spectrum shaping on first multi-wavelength dummy light generated by a dummy light source, to obtain second multi-wavelength dummy light, so that a spectral feature of the second multi-wavelength dummy light is different from a spectral feature of service light. The light emitting apparatus selects target dummy light from the second multi-wavelength dummy light to fill an idle band. A light receiving apparatus receives the service light and the target dummy light from the light emitting apparatus. Because the target dummy light and the service light have different spectral features, the light receiving apparatus can effectively distinguish the service light from the target dummy light through spectrum detection and spectrum analysis. It should be understood that a manner of constructing a spectral feature through spectrum shaping is simple to implement, and no additional modulation needs to be performed on dummy light.

The following describes in detail the light emitting apparatus and the light receiving apparatus.

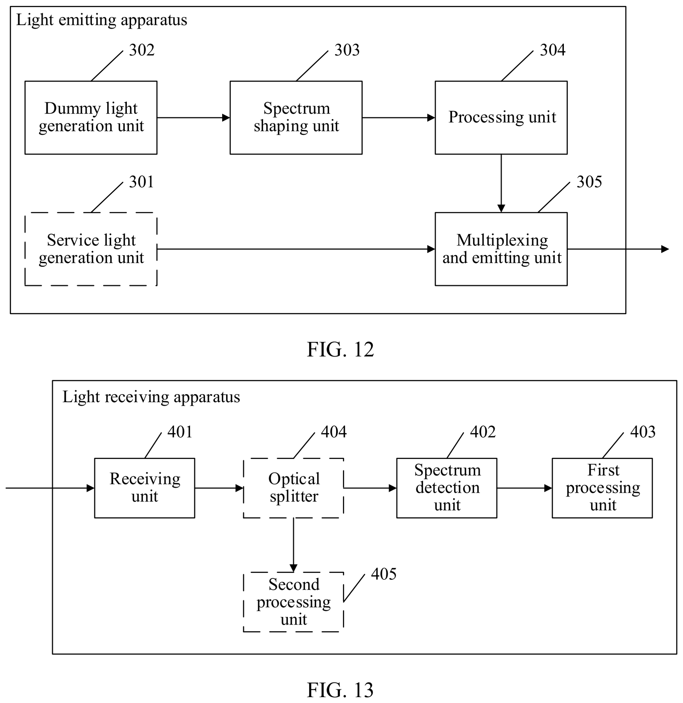

FIG. 12 is a diagram of a structure of a light emitting apparatus according to an embodiment of this application. The light emitting apparatus shown in FIG. 12 is specifically configured to perform the dummy light transmission method shown in FIG. 2. As shown in FIG. 12, the light emitting apparatus includes: a dummy light generation unit 302, a spectrum shaping unit 303, a processing unit 304, and a multiplexing and emitting unit 305. Optionally, the light emitting apparatus further includes a service light generation unit 301, and the service light generation unit 301 is configured to generate service light. The dummy light generation unit 302 is configured to generate first multi-wavelength dummy light. For features of the service light and the first multi-wavelength dummy light, refer to related descriptions of step 101 in the embodiment shown in FIG. 2. Details are not described herein again. The spectrum shaping unit 303 is configured to perform spectrum shaping on the first multi-wavelength dummy light to obtain second multi-wavelength dummy light. For a specific implementation of the spectrum shaping unit 303, refer to related descriptions of step 102 in the embodiment shown in FIG. 2. Details are not described herein again. The processing unit 304 is configured to obtain target dummy light from the second multi-wavelength dummy light. For a specific implementation of the processing unit 304, refer to related descriptions of step 103 in the embodiment shown in FIG. 2. Details are not described herein again. The multiplexing and emitting unit 305 is configured to emit the service light and the target dummy light. For a specific implementation of the multiplexing and emitting unit 305, refer to related descriptions of step 104 in the embodiment shown in FIG. 2. Details are not described herein again.

It should be noted that, module division of the light emitting apparatus shown in FIG. 12 is merely performed based on functions. In an example, the modules in the light emitting apparatus shown in FIG. 12 are independent of each other in hardware. In another example, some or all modules in the light emitting apparatus shown in FIG. 12 can be integrated together.

FIG. 13 is a diagram of a structure of a light receiving apparatus according to an embodiment of this application. The light receiving apparatus shown in FIG. 13 is specifically configured to perform the dummy light identification method shown in FIG. 7. As shown in FIG. 13, the light receiving apparatus includes: a receiving unit 401, a spectrum detection unit 402, and a first processing unit 403. The receiving unit 401 is configured to receive transmitted light from a light emitting apparatus, where the transmitted light includes service light and target dummy light. The spectrum detection unit 402 is configured to perform spectrum detection on the transmitted light. For a specific implementation of the spectrum detection unit 402, refer to related descriptions of step 202 in the embodiment shown in FIG. 7. Details are not described herein again. The first processing unit 403 is configured to perform spectrum analysis on the transmitted light to identify the target dummy light. For a specific implementation of the first processing unit 403, refer to related descriptions of step 203 in the embodiment shown in FIG. 7. Details are not described herein again. In a possible scenario, the light receiving apparatus further includes an optical splitter 404 and a second processing unit 405. The optical splitter 404 performs, based on optical power, optical splitting on the transmitted light received by the receiving unit 401, to obtain two paths of transmitted light. Each path of transmitted light obtained through the optical splitting includes the service light and the target dummy light, and the two paths of transmitted light are merely different in optical power. For example, the spectrum detection unit 402 performs spectrum detection on one path of transmitted light with relatively low optical power. The second processing unit 405 performs conventional processing on the other path of transmitted light with relatively high optical power.

It should be noted that, module division of the light receiving apparatus shown in FIG. 13 is merely performed based on functions. In an example, the modules in the light receiving apparatus shown in FIG. 13 are independent of each other in hardware. In another example, some or all modules in the light receiving apparatus shown in FIG. 13 can be integrated together.

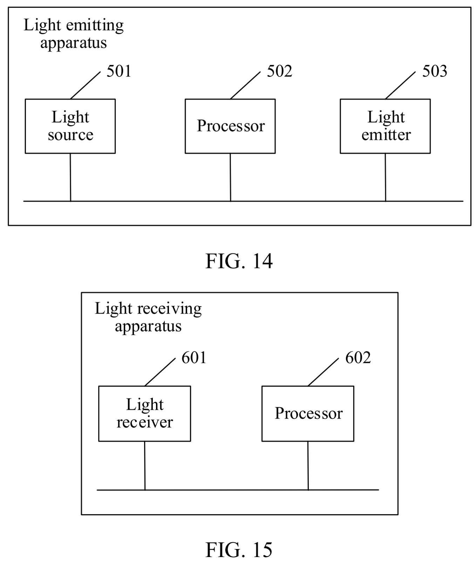

FIG. 14 is a diagram of a structure of another light emitting apparatus according to an embodiment of this application. As shown in FIG. 14, the light emitting apparatus includes a light source 501, a processor 502, and a light emitter 503. The light source 501 is configured to perform step 101 in the embodiment shown in FIG. 2. The processor 502 is configured to perform step 102 and step 103 in the embodiment shown in FIG. 2. The light emitter 503 is configured to perform step 104 in the embodiment shown in FIG. 2. In a possible implementation, the light source 501 includes the foregoing dummy light generation unit 302. Optionally, the light source 501 further includes the service light generation unit 301. The processor 502 includes the foregoing spectrum shaping unit 303 and the processing unit 304. The light emitter 503 includes the foregoing multiplexing and emitting unit 305.

FIG. 15 is a diagram of a structure of another light receiving apparatus according to an embodiment of this application. As shown in FIG. 15, the light receiving apparatus includes a light receiver 601 and a processor 602. The light receiver 601 is configured to perform step 201 in the embodiment shown in FIG. 7. The processor 602 is configured to perform step 202 and step 203 in the embodiment shown in FIG. 7. In a possible implementation, the light receiver 601 includes the foregoing receiving unit 401. Optionally, the light receiver further includes the foregoing optical splitter 404. The processor 602 includes the foregoing spectrum detection unit 402 and the first processing unit 403. Optionally, the processor 602 further includes the foregoing second processing unit 405.

Finally, it should be noted that: The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A dummy light transmission method, comprising:
generating first multi-wavelength dummy light, wherein the first multi-wavelength dummy light is distributed in a plurality of bands;
performing spectrum shaping on the first multi-wavelength dummy light to obtain second multi-wavelength dummy light, wherein a spectral feature of the second multi-wavelength dummy light is different from a spectral feature of service light;
obtaining target dummy light from the second multi-wavelength dummy light, wherein a band of the target dummy light is different from a band of the service light; and
emitting the service light and the target dummy light through an optical fiber.

2. The method according to claim 1, wherein dummy light distributed in a first band of the second multi-wavelength dummy light and dummy light distributed in a second band of the second multi-wavelength dummy light have different spectral features.

3. The method according to claim 1 or 2, wherein a light intensity of the second multi-wavelength dummy light periodically varies with a wavelength.

4. The method according to claim 3, wherein performing the spectrum shaping on the first multi-wavelength dummy light to obtain the second multi-wavelength dummy light comprises:
performing optical splitting on the first multi-wavelength dummy light to obtain two paths of multi-wavelength dummy light;
performing phase adjustment on one path of multi-wavelength dummy light in the two paths of multi-wavelength dummy light, wherein an amplitude of the phase adjustment periodically varies with a wavelength; and
multiplexing the other path of multi-wavelength dummy light in the two paths of multi-wavelength dummy light with a path of multi-wavelength dummy light obtained through the phase adjustment to obtain the second multi-wavelength dummy light.

5. The method according to claim 3 or 4, wherein in the second multi-wavelength dummy light, a length of a first cycle in which a light intensity in the first band varies with a wavelength is different from a length of a second cycle in which a light intensity in the second band varies with a wavelength.

6. The method according to claim 1 or 2, wherein there is a dip spectral feature in at least one band in which the second multi-wavelength dummy light is distributed, and in the dip spectral feature, a light intensity attenuation amplitude in a target wavelength range is greater than a preset value.

7. The method according to claim 6, wherein performing the spectrum shaping on the first multi-wavelength dummy light to obtain the second multi-wavelength dummy light comprises:
attenuating or blocking dummy light in the target wavelength range in at least one band in which the first multi-wavelength dummy light is distributed.

8. The method according to claim 6 or 7, wherein in the second multi-wavelength dummy light, a wavelength range of a dip spectral feature in the first band is different from a wavelength range of a dip spectral feature in the second band; in the second multi-wavelength dummy light, a light intensity attenuation amplitude of a dip spectral feature in the first band is different from a light intensity attenuation amplitude of a dip spectral feature in the second band; or in the second multi-wavelength dummy light, a quantity of dip spectral features in the first band is different from a quantity of dip spectral features in the second band.

9. A dummy light identification method, comprising:
receiving transmitted light through an optical fiber, wherein the transmitted light is distributed in a plurality of bands;
obtaining a spectral feature of the transmitted light; and
performing spectrum analysis on the spectral feature of the transmitted light, to determine that transmitted light that is in a target band and that has a preset spectral feature in the transmitted light is dummy light.

10. The method according to claim 9, wherein performing the spectrum analysis on the spectral feature of the transmitted light, to determine that the transmitted light that is in the target band and that has the preset spectral feature in the transmitted light is the dummy light comprises:
obtaining a target band in which a light intensity periodically varies with a wavelength and that is of the transmitted light;
comparing a length that is of a preset cycle in which a light intensity varies with a wavelength and that is described by using the preset spectral feature, with a length that is of a target cycle in which the light intensity varies with the wavelength and that is in a spectral feature of the target band; and
if an absolute value of a difference between the length of the preset cycle and the length of the target cycle is less than a preset value, determining that the transmitted light in the target band is the dummy light.

11. The method according to claim 9, wherein performing the spectrum analysis on the spectral feature of the transmitted light, to determine that the transmitted light that is in the target band and that has the preset spectral feature in the transmitted light is the dummy light comprises:
obtaining a target band in which the transmitted light has a dip spectral feature; and
in the dip spectral feature in the target band, if a light intensity attenuation amplitude in a target wavelength range is greater than a preset value, determining that the transmitted light in the target band is the dummy light.

12. A light emitting apparatus, comprising: a dummy light generation unit, a spectrum shaping unit, a processing unit, and a multiplexing and emitting unit, wherein
the dummy light generation unit is configured to generate first multi-wavelength dummy light, wherein the first multi-wavelength dummy light is distributed in a plurality of bands;
the spectrum shaping unit is configured to perform spectrum shaping on the first multi-wavelength dummy light to obtain second multi-wavelength dummy light, wherein a spectral feature of the second multi-wavelength dummy light is different from a spectral feature of service light;
the processing unit is configured to obtain target dummy light from the second multi-wavelength dummy light, wherein a band of the target dummy light is different from a band of the service light; and
the multiplexing and emitting unit is configured to emit the service light and the target dummy light through an optical fiber.

13. The light emitting apparatus according to claim 12, wherein dummy light distributed in a first band of the second multi-wavelength dummy light and dummy light distributed in a second band of the second multi-wavelength dummy light have different spectral features.

14. The light emitting apparatus according to claim 12 or 13, wherein a light intensity of the second multi-wavelength dummy light periodically varies with a wavelength.

15. The light emitting apparatus according to claim 14, wherein the spectrum shaping unit comprises: a beam splitter, a phase shifter, and a beam combiner, wherein
the beam splitter is configured to perform optical splitting on the first multi-wavelength dummy light to obtain two paths of multi-wavelength dummy light;
the phase shifter is configured to perform phase adjustment on one path of multi-wavelength dummy light in the two paths of multi-wavelength dummy light, wherein an amplitude of the phase adjustment periodically varies with a wavelength; and
the beam combiner is configured to multiplex the other path of multi-wavelength dummy light in the two paths of multi-wavelength dummy light with a path of multi-wavelength dummy light obtained through the phase adjustment to obtain the second multi-wavelength dummy light.

16. The light emitting apparatus according to claim 14 or 15, wherein in the second multi-wavelength dummy light, a length of a first cycle in which a light intensity in the first band varies with a wavelength is different from a length of a second cycle in which a light intensity in the second band varies with a wavelength.

17. The light emitting apparatus according to claim 12 or 13, wherein there is a dip spectral feature in at least one band in which the second multi-wavelength dummy light is distributed, and in the dip spectral feature, a light intensity attenuation amplitude in a target wavelength range is greater than a preset value.

18. The light emitting apparatus according to claim 17, wherein the spectrum shaping unit is specifically configured to attenuate or block dummy light in the target wavelength range in at least one band in which the first multi-wavelength dummy light is distributed.

19. The light emitting apparatus according to claim 17 or 18, wherein in the second multi-wavelength dummy light, a wavelength range of a dip spectral feature in the first band is different from a wavelength range of a dip spectral feature in the second band; in the second multi-wavelength dummy light, a light intensity attenuation amplitude of a dip spectral feature in the first band is different from a light intensity attenuation amplitude of a dip spectral feature in the second band; or in the second multi-wavelength dummy light, a quantity of dip spectral features in the first band is different from a quantity of dip spectral features in the second band.

20. A light receiving apparatus, comprising a receiving unit, a spectrum detection unit, and a processing unit, wherein
the receiving unit is configured to receive transmitted light through an optical fiber, wherein the transmitted light is distributed in a plurality of bands;
the spectrum detection unit is configured to obtain a spectral feature of the transmitted light; and
the processing unit is configured to perform spectrum analysis on the spectral feature of the transmitted light, to determine that transmitted light that is in a target band and that has a preset spectral feature in the transmitted light is dummy light.

21. The light receiving apparatus according to claim 20, wherein the processing unit is specifically configured to:
obtain a target band in which a light intensity periodically varies with a wavelength and that is of the transmitted light;
compare a length that is of a preset cycle in which a light intensity varies with a wavelength and that is described by using the preset spectral feature, with a length that is of a target cycle in which the light intensity varies with the wavelength and that is in a spectral feature of the target band; and
if an absolute value of a difference between the length of the preset cycle and the length of the target cycle is less than a preset value, determine that the transmitted light in the target band is the dummy light.

22. The light receiving apparatus according to claim 20, wherein the processing unit is specifically configured to:
obtain a target band in which the transmitted light has a dip spectral feature; and
in the dip spectral feature in the target band, if a light intensity attenuation amplitude in a target wavelength range is greater than a preset value, determine that the transmitted light in the target band is the dummy light.

23. An optical transmission system, comprising the light emitting apparatus according to any one of claims 12 to 19 and the light receiving apparatus according to any one of claims 20 to 22.
